# EUROPÄISCHE PATENTSCHRIFT

(11) **EP 1 607 432 B1**
(45) Veröffentlichungstag und Bekanntmachung des Hinweises auf die Patenterteilung: **27.04.2016**
(21) Anmeldenummer: 05010840.6
(22) Anmeldetag: 19.05.2005
(51) Int. Cl.: C08J 5/18, C08L 23/02, B32B 27/32

(54) **Blends aus Styrol-Butadien-Blockcopolymeren und Polyolefinen für transparente, elastische Folien**
Blends of styrene/butadiene block copolymers and polyolefines for transparent and elastic films
Feuille élastique transparent en matière plastique avec mélange des copolymérisats séquences de styrène/butadiène et des polyolefines

(30) Priorität: 17.06.2004 DE 102004029132
(43) Veröffentlichungstag der Anmeldung: 21.12.2005
(73) Patentinhaber: INEOS Styrolution Europe GmbH, 60325 Frankfurt am Main (DE)
(72) Erfinder: Huber, Robert, 67117 Limburgerhof (DE)
(74) Vertreter: Jacobi, Markus Alexander

(56) Entgegenhaltungen:
- WO-A-96/23823
- US-A- 4 479 989
- US-A- 5 972 519
- US-A- 6 124 428
- DATABASE WPI Week 200027, Derwent Publications Ltd., London, GB; AN 2000-313048 & JP 2000 095902 A (SEKISUI CHEM IND CO LTD) 04 April 2000
- DATABASE WPI Week 198411, Derwent Publications Ltd., London, GB; AN 1984-066334 & JP S5 922948 A (CHISSO CORP) 06 Februar 1984

## Beschreibung

Die Erfindung betrifft eine Polymerfolie, enthaltend mindestens eine Schicht, welche aus den Komponenten
A) 3 - 5 Gew.-% eines thermoplastischen Elastomer auf Basis von Styrol (S-TPE), ausgewählt aus Styrol-Butadien-Blockcopolymeren der Struktur S-(S/B)-S, wobei S für einen Polystyrolblock und S/B für einen Styrol- Butadien-- Copolymerblock steht, und
B) 95 - 97 Gew.-% eines Polyolefins, wobei die Komponente A) aus 15 bis 50 Gew.-% Butadien und 50 bis 85 Gew.-% Styrol aufgebaut ist.

Verpackungsfolien werden häufig aus Polyolefinen hergestellt. Um dünnerer Folien herzustellen zu können, wäre es wünschenswert, die Reißdehnung, Weiterreißfestigkeit und Puncture Resistance von Polyolefindfolien zu erhöhen.

Styrol-Butadien-Stryol-Blockcopolymere weisen bei entsprechendem Butadiengehalte eine hohe Reißdehnung auf, neigen aber aufgrund des Butadienblockes zu Vernetzung und Stippenbildung. US 5,972,519 und WO 96/23823 beschreiben flexible, transparente Folien aus Styrol-Butadien-Blockcopolymeren mit einem statistischen Styrol/- Butadien-Copolymerblock für die Lebensmittelverpackung.

Die US 4,479,989 beschreibt einen flexiblen Film für Blutbehälter, welcher 30 bis 90% eines linearen Polyethylen niedriger Dichte (LLDPE) und 10 bis 70% eines Styrol-Ethylen-Butylen-Styrol-Blockcopolymeren enthält und bei Temperaturen von bis zu 120° Celsius sterilisiert werden kann.

Aus US 6,124,428 ist ein Verfahren zur Herstellung eines Filmes aus einem linearen Polyethylen oder dessen Blend mit einem Elastomeren auf Basis von Styrol und Butadien bekannt, dem zur Verbesserungen der Verarbeitbarkeit ein Sulfonatsalz als oberflächenaktive Substanz zugegeben wird.

Aufgabe der vorliegenden Erfindung ist es, stippenarme Folien mit hoher Reißdehnung längs und quer der Folie bereitzustellen, die auch bei geringen Foliendicken eine ausreichende Durchstoßfestigkeit und guten Weiterreißwiderstand aufweisen.

Demgemäß wurde die eingangs beschriebene Polymerfolie gefunden.

### Komponente A

Bevorzugt weist das S-TPE eine Reißdehnung von mehr als 300 %, besonders bevorzugt mehr als 500 %, insbesondere mehr als 600 %, gemessen nach ISO 527, auf und wird in einer Menge im Bereich von 1 bis 20 Gew.-%, bevorzugt 3 bis 5 Gew.-%, bezogen auf die Polystyrolformmasse, zugemischt. Besonders bevorzugt mischt man als S-TPE ein lineares oder sternförmiges Styrol-Butadien-Blockcopolymer mit außenliegenden Polystyrolblöcken S und dazwischenliegenden Styrol-Butadien-Copolymer-blöcken mit statistischer Styrol/Butadien-Verteilung (S/B)_{random} oder einem Styrolgradienten (S/B)ₜₐₚₑᵣ zu.

Der Gesamtbutadiengehalt liegt im Bereich von 15 bis 50 Gew.-%, besonders bevorzugt im Bereich von 25 bis 40 Gew.-%, der Gesamtstyrolgehalt liegt entsprechend im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew.-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 - 16%.

### Komponente B

Als Komponente B eignen sich beispielsweise teilkristalline Polyolefine, wie Homo- oder Copolymerisate von Ethylen, Propylen, Buten-1, Penten-1, Hexen-1, 4-Methylpenten-1 sowie Ethylencopolymerisate mit Vinylacetat, Vinylalkohol, Ethylacrylat, Butylacrylat oder Methacrylat. Bevorzut wird als Komponente B ein High-Density-Polyethylen (HDPE), Low-Density-Polyethylen (LDPE), Linear-Low-Density-Polyethylen (LLDPE), Polypropylen (PP), Ethylen-Vinylacetat-Copolymerisat (EVA) oder Ethylen-Acryl-Copolymerisat eingesetzt.

Die erfindungsgemäße Polymerfolie kann darüber hinaus die üblichen Hilfs- und Zusatzstoffe, Wie Gleitmittel, Antiblockmittel, Trennmittel, Stabilisatoren, Antistatika, Flammschutzmittel oder Farbmittel enthalten.

Die erfindungsgemäße Polymerfolie kann auch mehrschichtig aufgebaut sein, mindestens eine Schicht aus den Komponente A und B besteht. Die übrigen Schichten können aus den unter Komponente B angeführten Polyolefinen oder Mischungen davon bestehen.

In der Regel weist die erfindungsgemäße Polymerfolie eine Gesamtfoliendicke im Bereich von 1 bis 250 µm, bevorzugt eine Dicke im Bereich von 10 bis 150 µm auf.

Die erfindungsgemäße Polymerfolie kann nach geeigneten Verfahren wie Mono- und Coextrusion zu Schlauchfolien, Chill-Roll-Folien oder Breitschlitzfolien durch Kalandrieren, Spritzgießen oder Blasformen hergestellt werden.

Mit der erfindungsgemäßen Polymerfolie zeigen gegenüber Folien, die ausschließlich aus Polyolefin aufgebaut sind, eine wesentlich höhere Reißdehnung und/oder Puncture Resistance. Damit können Folien mit einer geringen Foliendicke und ausreichender Zähigkeit realisiert werden.

### Beispiele:

### Einsatzstoffe:

- LDPE:: Trithene TX 8079, Low-Density Polyethylen der Fa. Triunfo (Dichte 0,925 g/cm3, MFR (190°C/2.16 kg) 0,3g/10 min)
- LLDPE: Trithene TS 7003 Linear Low-density Polyethylen der Fa. Triunfo (Dichte 0,923 g/cm3, MFR (190°C/2.16 kg) 0,3 g/10 min)
- SB: Styroflex^{®} 2G66 (Thermoplastisches Elastomer auf Basis eines Styrol-Butadien-Blockcopolymeren mit statistischem S/B-Mittelblock der BASF Aktiengesellschaft)

### Prüfmethoden:

Die Probekörper für die mechanischen Prüfungen wurden längs und quer aus den Folien geschnitten. E-Modul, Bruchspannung und Reißdehnung wurden im Zugversuch nach ISO 527-2 bestimmt.

Die Messung der Bruchdehnung (Puncture Resistance Test) erfolgte nach Normvorschlag FNK 403.3.

### Herstellung der Folien:

Die einschichtigen (F1, VF 1) und mehrschichtigen (VF3, VF 2) Folien wurden durch Blasextrusion hergestellt. Zusammensetzung und Eigenschaften der erfindungsgemäßen Folien F1 und der Vergleichsfolien VF 1, VF 2 und VF3 sind in den Tabellen 1 und 2 zusammengestellt.

Die erfindungsgemäße Folie F1 zeigt trotz geringerer Foliendicke eine deutlich höhere Reißdehnung und Zugspannung. Die mikroskopische Aufnahme zeigt eine feine Verteilung des SB-Polymeren in Form von feinen Tröpfchen. Die Folie VF3 zeigt trotz deutlich geringerer Foliendicke eine höhere Zugspannung.

**Tabelle 1**

| | VF1 (LDPE/LLDPE 70/30) | F1 (LDPE/LLDPE/SB (68/29/3) |
|---|---|---|
| Foliendicke [µm] | 98 | 93 |
| E-Modul [MPa] (l/q) | 205 / 226 | 186 / 202 |
| Zugspannung (Max.) [MPa] (l/q) | 21,3 / 22,9 | 23,8 / 25,7 |
| Reißdehnung [%] (l/q) | 612 / 482 | 687 / 597 |
| Puncture Kraft [N] | 6,8 | 6,7 |
| Puncture Dehnung [mm] | 9,3 | 9,9 |

**Tabelle 2**

| | VF2 Coextrusionsfolie AAA (LDPE 100) | VF3 Coextrusionsfolie ABA LDPE 10 µm / LDPE/SB (50/50) 5µm / LDPE 10 µm |
|---|---|---|
| Foliendicke [µm] | 56 | 25 |
| E-Modul [MPa] (l/q) | 167 / 189 | 127 / 168 |
| Zugspannung (Max.) [MPa] (l/q) | 19,7 / 19,9 | 21,8 / 20,6 |
| Reißdehnung [%] (l/q) | 249 / 496 | 179 / 435 |
| Puncture Kraft [N] | 4,9 | 3,5 |
| Puncture Dehnung [mm] | 9,3 | 11,6 |

## Patentansprüche

1. Polymerfolie, enthaltend mindestens eine Schicht, welche aus den Komponenten
A) 3 - 5 Gew.-% eines thermoplastischen Elastomer auf Basis von Styrol (S-TPE), ausgewählt aus Styrol-Butadien-Blockcopolymeren der Struktur S-(S/B)-S, wobei S für einen Polystyrolblock und S/B für einen Styrol- Butadien-Copolymerblock steht, und
B) 95 - 97 Gew.-% eines Polyolefins, besteht, wobei die Komponente A) aus 15 bis 50 Gew.-% Butadien und 50 bis 85 Gew.-% Styrol aufgebaut ist.

2. Polymerfolie nach Anspruch 1, **dadurch gekennzeichnet, dass** der Styrol-Butadien-Copolymerblock S/B der Komponente A) eine statistische Verteilung der Styrol- und Butadieneinheiten aufweist.

3. Polymerfolie nach einem der Ansprüche 1 oder 2, **dadurch gekennzeichnet, dass** der Styrol-Butadien-Copolymerblock (S/B) der Komponente A) aus 30 bis 70 Gew.-% Styrol und 25 bis 70 Gew.-% Butadien aufgebaut ist.

4. Polymerfolie nach einem der Ansprüche 1 bis 3, **dadurch gekennzeichnet, dass** der Anteil der Polystyrolblöcke S im Bereich von 5 bis 40 Gew.-% liegt.

5. Polymerfolie nach einem der Ansprüche 1 bis 4, **dadurch gekennzeichnet, dass** der 1,2-Vinylgehalt im Styrol-Butadien-Copolymerblock (S/B) der Komponent A) unter 20 % betägt.

6. Polymerfolie nach einem der Ansprüche 1 bis 5, **dadurch gekennzeichnet, dass** er als Polyolefin ein High-Density-Polyethylen (HDPE), Low-Density-Polyethylen (LDPE), Linear-Low-Density-Polyethylen (LLDPE), Polypropylen (PP), Ethylen-Vinylacetat-Copolymerisat (EVA) oder Ethylen-Acryl-Copolymerisat enthält.

7. Polymerfolie nach einem der Ansprüche 1 bis 6, **dadurch gekennzeichnet, dass** sie eine Dicke im Bereich von 1 bis 250 µm aufweist.

8. Mehrschichtige Folie, enthaltend mindestens eine Schicht aus einer Polymerfolie gemäß einem der Ansprüche 1 bis 7.

## Claims

1. Polymer film comprising at least one layer which consists of the components
A) from 3 to 5% by weight of a thermoplastic elastomer based on styrene (S-TPE), selected from styrene-butadiene block copolymers of S-(S/B)-S structure, where S is a polystyrene block and S/B is a styrene-butadiene copolymer block, and
B) from 95 to 97% by weight of a polyolefin, wherein component A) is composed of from 15 to 50% by weight of butadiene and from 50 to 85% by weight of styrene.

2. Polymer film according to Claim 1, **characterized in that** the styrene-butadiene copolymer block S/B of component A) has random distribution of the styrene units and butadiene units.

3. Polymer film according to either of Claims 1 and 2, **characterized in that** the styrene-butadiene copolymer block (S/B) of component A) is composed of from 30 to 70% by weight of styrene and from 25 to 70% by weight of butadiene.

4. Polymer film according to any of Claims 1 to 3, **characterized in that** the proportion of the polystyrene blocks S is in the range from 5 to 40% by weight.

5. Polymer film according to any of Claims 1 to 4, **characterized in that** the 1,2-vinyl content in the styrene-butadiene copolymer block (S/B) of component A) is below 20%.

6. Polymer film according to any of Claims 1 to 5, **characterized in that** it comprises, as polyolefin, a high-density polyethylene (HDPE), low-density polyethylene (LDPE), linear low-density polyethylene (LLDPE), polypropylene (PP), ethylenevinyl acetate copolymer (EVA), or ethylene-acrylic copolymer.

7. Polymer film according to any of Claims 1 to 6, **characterized in that** its thickness is in the range from 1 to 250 µm.

8. Multilayer film comprising at least one layer composed of a polymer film according to any of Claims 1 to 7.

## Revendications

1. Film polymère, contenant au moins une couche, qui est constituée par les composants
A) 3 à 5 % en poids d'un élastomère thermoplastique à base de styrène (S-TPE), choisi parmi les copolymères séquencés de styrène-butadiène de structure S-(S/B)-S, S représentant une séquence polystyrène et S/B représentant une séquence copolymère de styrène-butadiène, et
B) 95 à 97 % en poids d'une polyoléfine, le composant A) étant formé par 15 à 50 % en poids de butadiène et 50 à 85 % en poids de styrène.

2. Film polymère selon la revendication 1, **caractérisé en ce que** la séquence copolymère de styrène-butadiène S/B du composant A) présente une distribution statistique des unités styrène et butadiène.

3. Film polymère selon l'une quelconque des revendications 1 ou 2, **caractérisé en ce que** la séquence copolymère de styrène-butadiène (S/B) du composant A) est formée par 30 à 70 % en poids de styrène et 25 à 70 % en poids de butadiène.

4. Film polymère selon l'une quelconque des revendications 1 à 3, **caractérisé en ce que** la proportion des séquences polystyrène S est dans la plage allant de 5 à 40 % en poids.

5. Film polymère selon l'une quelconque des revendications 1 à 4, **caractérisé en ce que** la teneur en 1,2-vinyle de la séquence copolymère de styrène-butadiène (S/B) du composant A) est inférieure à 20 %.

6. Film polymère selon l'une quelconque des revendications 1 à 5, **caractérisé en ce qu'**un polyéthylène haute densité (HDPE), un polyéthylène basse densité (LDPE), un polyéthylène linéaire basse densité (LLDPE), un polypropylène (PP), un copolymère d'éthylène-acétate de vinyle (EVA) ou un copolymère d'éthylène-acryle est contenu en tant que polyoléfine.

7. Film polymère selon l'une quelconque des revendications 1 à 6, **caractérisé en ce qu'**il présente une épaisseur dans la plage allant de 1 à 250 µm.

8. Film multicouche, contenant au moins une couche en un film polymère selon l'une quelconque des revendications 1 à 7.
